# EUROPEAN PATENT APPLICATION

(11) **EP 1 050 930 A1**
(43) Date of publication of application: **08.11.2000**
(21) Application number: 00830181.4
(22) Date of filing: 13.03.2000
(51) Int. Cl.: H01R 13/58, H02G 3/06

(54) **Cable clamp for electric equipments**

(30) Priority: 07.05.1999 IT FI990055 U
(71) Applicant: VERDA s.r.l., 50141 Firenze (IT)
(72) Inventor: Pini, Belisario, 50141 Firenze (IT)
(74) Representative: Martini, Lazzaro

(57) **Abstract**

The present invention relates to a cable clamp for electric equipments consisting of a body (1) which presents a substantially tubolar portion (10), into which a cable (2) for electric equipments is inserted, so as to pass through the tubolar portion; the cable (2) is clamped by means of corresponding clamping means consisting of a flexible portion (44) of the body itself (1) provided with at least one protrusion or tooth (45) on its internal face, bending toward its longitudinal axis (y-y) for clamping the cable (2) after the body (1) has been introduced into a bush or tige (5).

## Description

The present invention relates to a cable clamp for electric equipments.

There are known similar devices, the so-called "cable clamps" comprising a substantially tubolar body, which is introduced into a metal bush or "tige" supporting an electric equipment (for instance a lamp holder). A cable for an electric equipment is inserted into the cable clamp, so as to pass through it, and it is "clamped" in order to prevent its sliding inside the tubolar body, that is in relation to this equipment fitted with the above mentioned components. The tubolar body of the cable clamp is provided with two flexible fins protruding forward and retracting toward their longitudinal axis when this body is introduced into the bush or tige , so as to clamp the cable.
The flexible fins are defined by two opposite portions of the tubolar body, cut lengthwise, so as to feature a rectangular window-like opening extending lengthwise and open on three sides. In other words, a communication light forms between the interior and the exterior of the tubolar body which makes up the cable clamp. The presence of this opening might cause uncovered portions of the conductor to come accidentally in contact with the internal surface of the tige in which the cable clamp is inserted, so as to render this equipment less safe in normal operation.

The main object of the present invention is to overcome the above inconvenience.This result has been achieved by building a device having the features described in the part of claim 1 concerning features according to the present invention. Further features of the invention are the subject of the dependent claims.

Since the cable clamp subject of the present invention is provided with one clamping fin only, it is possible to obtain a clamping of the cable which compares functionally to the clamping of other well-known devices but capable of offering a higher degree of safety as regards electric insulation; moreover, the device subject of the present invention is easy to build, cheap and reliable even after long working periods.

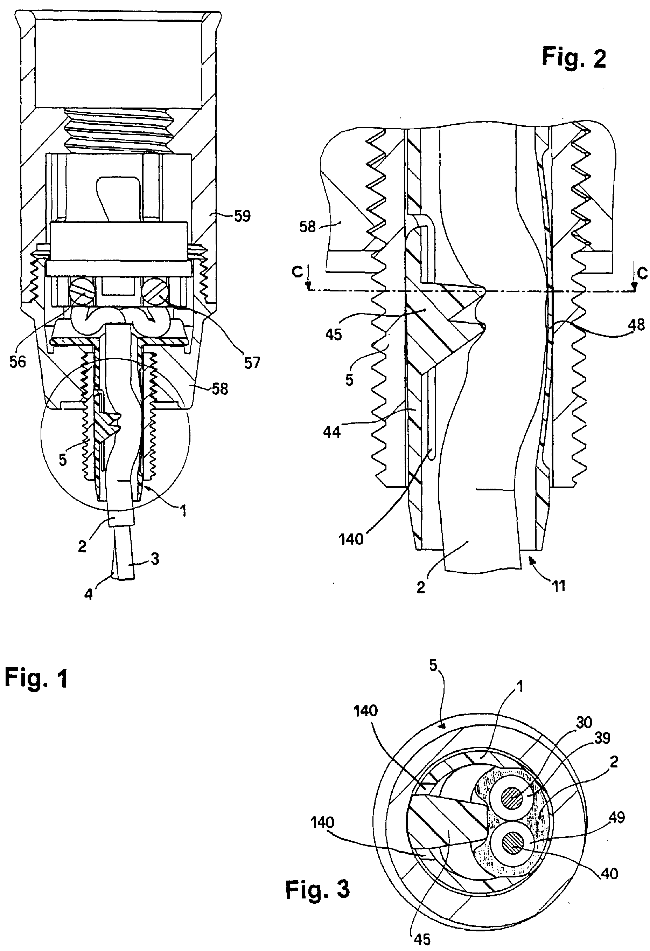

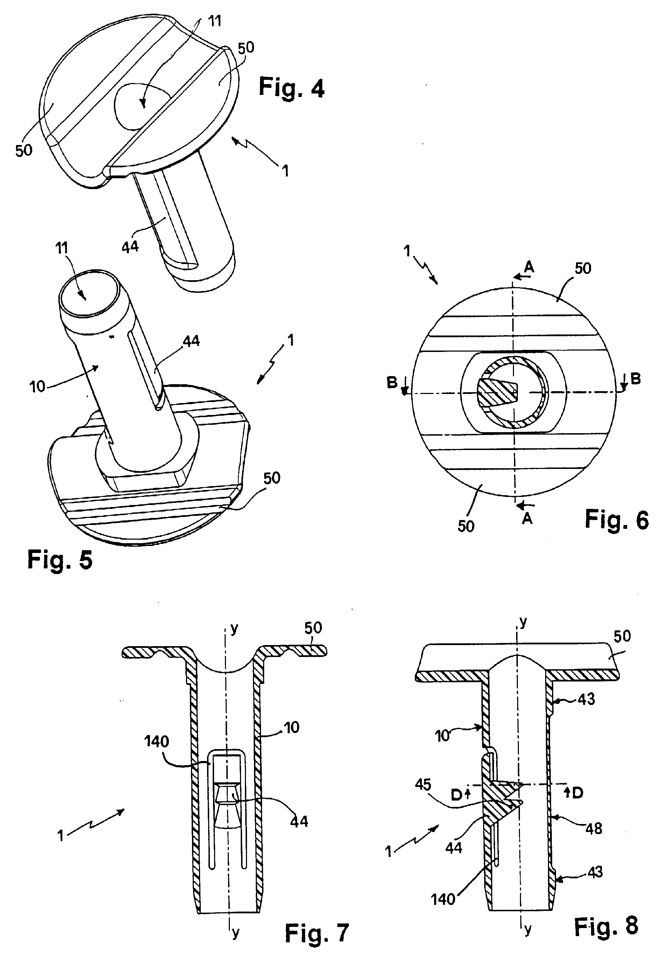

These advantages and features, as well as further advantages and features of the present invention, will be better understood by technicians operating in this field thanks to the enclosed drawings, as a practical explanation of the present invention, which, however, should not be considered as a limitation, wherein: - Fig.1 shows a longitudinal sectional view of a portion of the equipment fitted with a cable clamp according to the invention; - Fig. 2 shows a view, drawn in enlarged scale, of a detail marked with a circle in Fig 1 ; - Fig. 3 shows a cross section of the detail in Fig 2, according to line C-C; - Figs. 4, 5 show two perspective views of the cable clamp illustrated by the foregoing figures; - Fig. 6 shows a cross sectional view of the device subject of the present invention, according to lines D-D of Fig. 8; - Figs. 7 and 8 show two longitudinal sectional views of the device subject of the present invention, according to lines A-A and B-B of Fig. 6, respectively.

Seen in its essential structure and with reference to the figures in the enclosed drawings, a cable clamp according to the present invention consists of a hollow body (1) featuring a tubolar portion (10) which is introduced into a tubolar element (5) and of a couple of elastically flexible fins (50) positioned on the side opposite to the introduction side of the tige which constitute a flange for electric insulation corresponding to the end of the tubolar element (5), where the cable clamp is connected to the equipment provided with the above components.

The tubolar portion (10) features a central channel (11), in which a cable (2) for electric equipment, for instance a lamp holder, is positioned so as to pass through it. Fig.2 schematically illustrates the electric equipment by means of two portions (58, 59) which can be screwed together for containing a lamp holder fitted with corresponding binding clamps (56, 57) on which two conductors, contained in the cable (2) are fixed (3, 4) each of them featuring an internal core (30, 40), made of material which is an electrical conductor, and a corresponding external protective covering (39, 49).

The cable clamp (1) subject of the present invention advantageously features clamping means for clamping the cable (2) in its interior, consisting of one flexible portion (44) of the body itself (1), provided with at least one protusion or tooth (45) on its internal face. In practice, the flexible portion (44) of the body (1) consists of a fin bending toward the longitudinal axis (y-y) of the body (1) for clamping the cable (2), after the body (1) has been introduced into a bush or tige (5). Fig 7 shows more clearly that said flexible portion (44) consists of part of the cylindrical surface constituting said tubolar portion (10) separated from the remaining part by a cut (140) having an upside- down U profile. On the side opposite to the flexible portion (44) the tubolar portion features a portion having a minor section (48) which bends toward the exterior. In particular, the portion having a minor section (48) defines a concavity on the external face of the tubolar portion (10); this feature is shown more clearly in fig. 8, where the portion (48) is reentrant in comparison with the profile presented by the remaining part (43) of the tubolar portion, as well as in fig. 2, where the shift to the right of the unit comprising the cable (2) and the portion having a minor section (48) is visible.

The cable (2) is kept at a maximum distance from the opening which runs along the contour of the flexible portion (44), so as to allow this device to offer a much higher degree of safety. Moreover, it is possible to obtain an excellent clamping, which can be compared to the clamping capacity of conventional devices. As regards the construction of the present cable clamp, said device can be built by injecting plastic material into suitable die cavities.

## Claims

1. Cable clamp for electric equipments, consisting of a body (1) which featutes a substantially tubolar portion (10), into which a cable for an electric equipments is introduced, so that it can pass through the portion and be clamped by means of the corresponding clamping means, cable clamp (1) characterised by the fact that the clamping means for the cable (2) consist of one flexible portion (44) of the body itself, provided with at least one protusion or tooth (45) on its internal face, bending toward its corresponding longitudinal axis (y-y) for clamping the cable (2) after the body (1) has been introduced into a bush or tige (5).

2. Cable clamp according to claim 1, characterised by the fact that said flexible portion (44) consists of part of the cylindrical portion constituting said tubolar portion (10) separated from the remaining part by a cut extending on three sides of same.

3. Cable clamp according to claim 1, characterised by the fact that said tubolar portion (10) features a portion having a minor section, on the side opposite to the side of said flexible portion (44), which bends toward the exterior.

4. Cable clamp according to claim 3, characterised by the fact that said portion having a minor section (48) defines a concavity on the external face of the tubolar portion (10).

5. Cable clamp according one more of the foregoing claims characterised by the fact that the cable clamp is made of moulded plastic material.
